Europäisches Patentamt

European Patent Office

Office européen des brevets

(11) Veröffentlichungsnummer: **0 492 748 A2**

# EUROPÄISCHE PATENTANMELDUNG

(21) Anmeldenummer: **91250310.9**

(51) Int. Cl.⁵: **H04M 1/02**

(22) Anmeldetag: **11.11.91**

(30) Priorität: **21.12.90 DE 4041988**

(43) Veröffentlichungstag der Anmeldung:
**01.07.92 Patentblatt 92/27**

(84) Benannte Vertragsstaaten:
**AT BE CH DE DK ES FR GB GR IT LI LU NL**

(71) Anmelder: **MANNESMANN Aktiengesellschaft**
**Mannesmannufer 2**
**W-4000 Düsseldorf 1(DE)**

(72) Erfinder: **Preker, Friedrich**
**Fährstrasse 218**
**W-4000 Düsseldorf(DE)**

(74) Vertreter: **Presting, Hans-Joachim, Dipl.-Ing.**
**et al**
**Meissner & Meissner Patentanwaltsbüro**
**Herbertstrasse 22**
**W-1000 Berlin 33(DE)**

(54) **Kommunikationsgerät, insbesondere Endgerät für den Telefonverkehr.**

(57) Um das Gerät sowohl im Büro als Auftischgerät als auch im Bereich der mobilen Telekommunikation als leicht transportierbares Gerät zu gestalten, wird vorgeschlagen, daß zumindest ein Teil (6) des Gehäuses aufklappbar, um eine quer durch das Gehäuse (1) an einem Gehäuseende (8) verlaufende Schwenkachse (9) in Richtung auf den Gehäuseboden (11) schwenkbar und verriegelbar und wieder entriegelbar ist, wobei die Schwenkklappe (10) in aufgeklappter Stellung als Standstütze (12) für das hochgestellte Gehäuse (1) dient und in zugeklappter Lage als Schutz (16) für die Bedienungsseite (2).

Fig.1

EP 0 492 748 A2

Die Erfindung betrifft ein Kommunikationsgerät, insbesondere ein Endgerät für den Telefonverkehr, mit einem Gehäuse, das in seinem Inneren elektronische Baugruppen für die Aufnahme, Speicherung oder Wiedergabe von Informationen aufnimmt, sowie mit einem auf einer Bedienungsseite angeordneten Tastenfeld.

Derartige Geräte werden als "Telefonhörer" und als "Telefongerät" gleichzeitig eingesetzt. Jedoch unterscheiden sich Telefonhörer aufgrund ihres Einsatzzwecks u.U. erheblich. So sind Telefonhörer außerhalb des Betriebsgebrauchs auf einen Geräteunterteil aufgelegt und werden während **des Gebrauchs in der Hand gehalten, wobei während des Gebrauchs** irgendwelche Nebentätigkeiten nur sehr eingeschränkt ausgeübt werden können.

Im Zuge der Entwicklung des sogenannten schnurlosen Telefons für die mobile Funktechnik auf digitaler Basis ist schon vorgeschlagen worden, ein schnurloses Standtelefon zu verwenden (Beilage des VDE "Dialog", November/Dezember 1990, Seite 14). Nach dem Wählen, d.h. dem Betätigen der Tasten, wobei eine Hand für das Halten des Telefongerätes und die andere Hand für das Betätigen der Tasten eingesetzt wird, kann ein solches Standtelefon in Besprechungen vor den Sprechenden gestellt werden, sobald die gewünschte Sprechverbindung hergestellt ist. Im übrigen eignet sich jedoch ein solches schnurloses Standtelefon nicht für die Handhabung außerhalb eines Büros, da es nur schwerlich zu transportieren ist.

Der vorliegenden Erfindung liegt daher die Aufgabe zugrunde, ein Kommunikationsgerät zu schaffen, das nicht nur für die Verwendung im Büro, sondern auch außerhalb, d.h. im mobilen Bereich, verwendungsfähig ist.

Die gestellte Aufgabe wird auf der Grundlage des eingangs bezeichneten Kommunikationsgeräts erfindungsgemäß dadurch gelöst, daß zumindest ein Teil des Gehäuses aufklappbar, um eine quer durch das Gehäuse an einem Gehäuseende verlaufende Schwenkachse in Richtung auf den Gehäuseboden schwenkbar und verriegelbar und wieder entriegelbar ist, wobei die Schwenkklappe in aufgeklappter Lage als Standstütze für das hochgestellte Gehäuse dient und in zugeklappter Lage als Schutz für die Bedienungsseite. Ein solches Gerät eignet sich daher für die Verwendung sowohl als Standgerät als auch als mobiles Gerät zum Gebrauch außerhalb des Büros. Vorteilhafterweise kann das Gerät auf einer entsprechenden **Unterlage für den Bediener in einer gewünschten Schrägstellung** eingestellt werden und die dafür vorhandene Schwenkklappe dient während des Transports gleichzeitig als Schutz für die Bedienungsseite. In mittlerer Position der Standstütze bildet das Gerät die Sprechstellung.

In Weiterbildung der Erfindung ist vorgesehen, daß die Schwenkklappe sich auf die Länge des Tastenfeldes erstreckt. Hierbei wird die Länge der Schwenkklappe vorteilhafterweise auf die Empfindlichkeit der einzelnen Geräteteile abgestimmt.

Nach weiteren Merkmalen der Erfindung ist vorgesehen, daß die Schwenkklappe aus transparentem Werkstoff hergestellt ist. Sie gestattet daher auch bei geschlossener Schwenkklappe die Einsichtnahme z.B. auf ein Display.

In Verbesserung der Erfindung wird vorgeschlagen, daß die Schwenkklappe einen etwa U-förmigen Querschnitt aufweist. Dadurch erhöht sich die Steifigkeit des Gerätes insgesamt.

Nach weiteren Merkmalen der Erfindung ist vorgesehen, daß die Verriegelung aus konzentrisch zu der Schwenkachse angeordneten lösbaren Verriegelungsscheiben besteht. Dadurch kann jede Stellung der Schwenkklappe zum Gehäuse verriegelt und wieder entriegelt werden, so z.B. auch die Schließstellung der Schwenkklappe.

In der Zeichnung ist ein Ausführungsbeispiel der Erfindung schematisch dargestellt und wird nachfolgend näher erläutert. Es zeigen:

Figur 1 eine perspektivische Ansicht des Geräts mit verschiedenen Stellungen der Schwenkklappe und

Figur 2 eine Seitenansicht des Geräts mit in Schließstellung befindlicher Schwenkklappe.

Das Gehäuse 1 nimmt in seinem Innern elektronische Baugruppen für die Aufnahme, Speicherung oder Wiedergabe von (akustischen) Informationen auf sowie auch Energie-Elemente und besitzt auf einer Bedienungsseite 2 ein Tastenfeld 3. Neben dem Tastenfeld 3 können weitere Felder für ein Display 4 und ein Mikrophon 5 vorgesehen sein.

Zumindest ein Teil 6 des Gehäuses 1 beginnend an einem Gehäuseabsatz 7 und endend an einem Gehäuseende 8 ist um eine quer durch das längliche Gehäuse 1 verlaufende, am Gehäuseende 8 angeordnete Schwenkachse 9 wegschwenkbar. Der Teil 6 bildet eine Schwenkklappe 10.

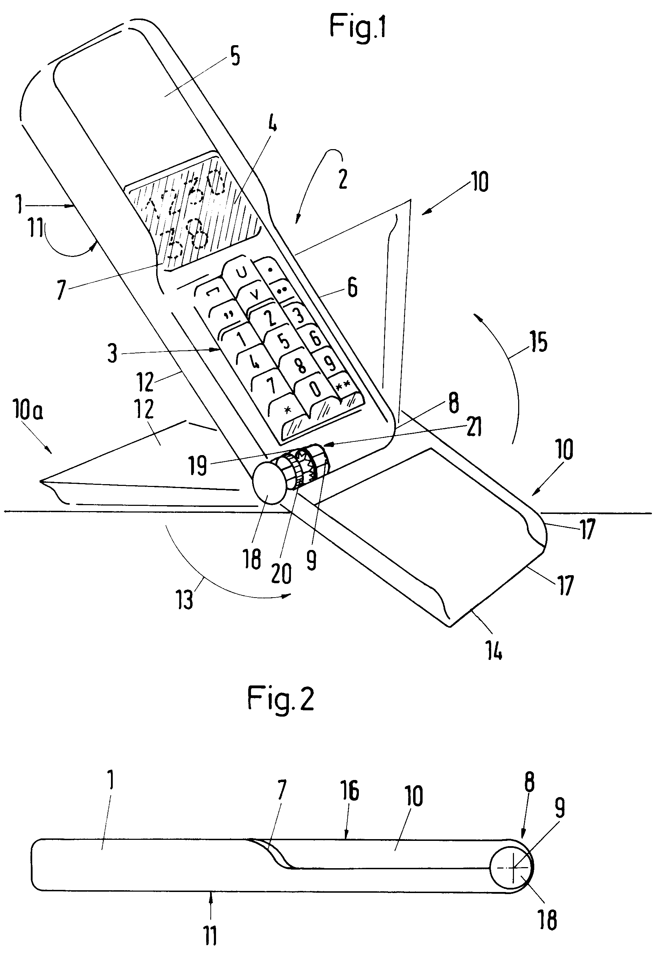

Die Schwenkklappe 10 ist aus der in Figur 2 gezeigten Schließstellung in Richtung auf einen Gehäuseboden 11 bis in die in Figur 1 gezeichnete Stellung 10a geschwenkt, arretiert und bildet so eine Handstütze 12. Nach Rückschwenken der Schwenkklappe 10 in Richtung 13 befindet sich diese bei einem als Telefon genutzten Kommunikationsgerät in Sprechstellung 14. Wird die Schwenkklappe 10 wieder in Richtung 15 geschwenkt und vollends geschlossen (Figur 2), bildet sie einen Schutz 16 für das Tastenfeld 3 bzw. je nach Länge für das gesamte Gerät. Die Schwenkklappe 10 kann aus dem Werkstoff des Gehäuses 1 hergestellt sein oder aus transparentem Werkstoff. Um einen dichten Schließspalt zu erhalten, ist der Querschnitt 17 der Schwenkklappe 10 etwa U-förmig ausgebildet.

Auf der Schwenkachse 9 ist neben der Verschlußscheibe 18 ein Paar verzahnter Verriegelungsscheiben 19 und 20 befestigt, die eine Verriegelung 21 bilden. Die Verriegelungsscheiben 19 und 20 sind durch entsprechend seitliches Verdrehen der Schwenkklappe 10 einrastbar oder lösbar.

Das vorliegend beschriebene Prinzip kann auch auf andere Kommunikationsgeräte wie Taschenrechner, Fernbedienungen für Fernsehgeräte u.dgl. angewendet werden.

## Patentansprüche

1. Kommunikationsgerät, insbesondere Endgerät für den Telefonverkehr, mit einem Gehäuse, das in seinem Inneren elektronische Baugruppen für die Aufnahme, Speicherung oder Wiedergabe von Informationen aufnimmt, sowie mit einem auf einer Bedienungsseite angeordneten Tastenfeld,
dadurch gekennzeichnet,
daß zumindest ein Teil (6) des Gehäuses (1) aufklappbar, um eine quer durch das Gehäuse (1) an einem Gehäuseende (8) verlaufende Schwenkachse (9) in Richtung auf den Gehäuseboden (11) schwenkbar und verriegelbar und wieder entriegelbar ist, wobei die Schwenkklappe (10) in aufgeklappter Lage als Standstütze (12) für das hochgestellte Gehäuse (1) dient und in zugeklappter Lage als Schutz (16) für die Bedienungsseite (2).

2. Kommunikationsgerät nach Anspruch 1,
dadurch gekennzeichnet,
daß die Schwenkklappe (10) sich auf die Länge des Tastenfeldes (3) erstreckt.

3. Kommunikationsgerät nach Anspruch 1 oder 2,
dadurch gekennzeichnet,
daß die Schwenkklappe (10) aus transparentem Werkstoff hergestellt ist.

4. Kommunikationsgerät nach einem oder mehreren der Ansprüche 1 bis 3,
dadurch gekennzeichnet,
daß die Schwenkklappe (10) einen etwa U-förmigen Querschnitt (17) aufweist.

5. Kommunikationsgerät nach einem oder mehreren der Ansprüche 1 bis 4,
dadurch gekennzeichnet,
daß die Verriegelung (21) aus konzentrisch zu der Schwenkachse (9) angeordneten lösbaren Verriegelungsscheiben (19, 20) besteht.

EP 0 492 748 A2

Fig.1

Fig.2